(19) Europäisches Patentamt
European Patent Office
Office européen des brevets

(11) **EP 1 286 244 A2**

(12) **EUROPEAN PATENT APPLICATION**

(43) Date of publication:
26.02.2003 Bulletin 2003/09

(51) Int Cl.⁷: **G06F 1/00**

(21) Application number: **02255660.9**

(22) Date of filing: **14.08.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(30) Priority: **16.08.2001 US 931348**<br><br>(71) Applicant: **GENERAL ELECTRIC COMPANY**<br>**Schenectady, NY 12345 (US)**<br><br>(72) Inventors:<br> • **Warner, Gregory Rade**<br>  **Cincinnati, Ohio 45213 (US)** | • **Peters, David Alan**<br>  **Milford, Ohio 45150 (US)**<br> • **Murphy, Paul Michael**<br>  **West Chester, Ohio 45069 (US)**<br> • **Molezzi, Michael Joseph**<br>  **Cincinnati, Ohio 45208 (US)**<br><br>(74) Representative: **Goode, Ian Roy et al**<br>  **GE LONDON PATENT OPERATION,**<br>  **Essex House,**<br>  **12/13 Essex Street**<br>  **London WC2R 3AA (GB)** |

(54) **Paperless records in aircraft maintenance**

(57) A document management system. The system uses well known MACs, Message Authentication Codes, or equivalents. In general, an MAC is used to authenticate a copy of a document. First, the document (18) is fed (21) to a specific algorithm (24), which produces the MAC (27). Then a copy-to-be-verified is fed to the same algorithm (24). If the same MAC (27) is obtained, the copy is taken as authenticated. Under the invention, when maintenance is undertaken on an aircraft, a technician uses a computer to generate a digital document (18) describing the maintenance. An MAC (27) is generated for the digital document (18). The technician encrypts the MAC (27), using the technician's encryption key (33). The encrypted MAC (34) is attached to the digital document (18), and the pair is stored. Now, any copies of the document (18) can be validated by (1) de-crypting the MAC (27) and (2) validating the document using the MAC (27). In one embodiment, no paper documents are generated, nor signed, at the time of the maintenance.

FIG 2

## Description

The invention concerns a system wherein maintenance records for aircraft are generated, and maintained, in a paperless system which is sufficiently secure and tamper-proof to satisfy the record-keeping requirements imposed by regulatory authorities and by the requirements of the commercial contracts commonly used in the aviation industry.

Traditionally, maintenance records for aircraft have been stored in a paper-based format. However, as computers become more powerful and ubiquitous, a changeover to computer storage is foreseen, if not underway at present.

One problem expected to occur in the changeover is a duplication of effort:

maintenance technicians will generate paper forms in the usual manner, and those forms will be later copied into the computer system. This approach involves a duplication of effort: in effect, the forms are completed twice, once when the technician completes the forms, and once when they are copied into the computer system. In addition, the process is error-prone: the process of copying the forms into the computer system is a transcription process, with its inherent potential for mistakes to occur.

Further, until the records are completely entered into the computer, the computer's records are not completely up-to-date. Thus, the full potential of the computer's power (1) for handling quality control and (2) providing rapid operational response cannot be used until the transcription process is completed.

Further still, under this approach, two sets of records exist: (1) the computer-based records and (2) the paper-based records. No efficient approach is seen for reconciling the two together. For example, if a person examining the computer records wishes to examine the original paper documents, those paper documents must somehow be found. However, the sheer number of paper records covering the operational lifetime of a single aircraft can run into the millions. Retrieving the desired paper record from the millions available is a daunting task.

Many of the preceding problems can be mitigated by eliminating the duplication, through elimination of the paper-based records. However, this approach creates its own problem. One problem relates to security. In the paper-based system, the physical completion, signing, and storage of tangible, physical documents by maintenance technicians is seen as providing high accuracy and reliability. If the physical documents are eliminated and computer records only are used, with no further accommodation, the possibility of error, and even intentional mischief, in the record-keeping is seen as increased.

The Inventors have developed a system which allows elimination of the paper-based records, yet retention of security and accuracy.

In one form of the invention, maintenance records for commercial aircraft are stored in digital format. Each record is processed using an authentication algorithm, which produces output. The output is sometimes called a signature, because the output is characteristic of the particular maintenance record processed by the algorithm, and a different record will produce a different output.

The maintenance records are paired, or linked, with their signatures, and stored. If a party wishes to verify that a given document is an authentic copy of a maintenance record, the party processes the given document using the algorithm, and compares the output-signature with a genuine signature taken from the stored pair.

Embodiments of the invention will now be described, by way of example, with reference to the accompanying drawings, in which:

Figure 1 illustrates an aircraft, a computer terminal used to generate maintenance records, and a communication system for relaying the records to a storage location.

Figures 2, 3, and 4 illustrate flow charts of processes undertaken by one, or more, forms of the invention.

Figure 5 illustrates an architecture utilized by one form of the invention.

A simplified overview will first be given. Maintenance records of commercial aircraft are created in digital format. In this creation step, existing paper records can be converted into the digital format; or the records can be generated initially in digital format, without paper; or both.

It is well known that digital data can be altered. However, the invention applies a cryptographic technique of the type known as Message Authentication Coding, MAC, to the digital records. In an MAC generally, the digital record, or message, is treated as input to an algorithm. The algorithm produces output. However, if the digital record, or message, is altered, and again processed by the algorithm, a different output will be produced.

Thus, any person can verify whether a copy of the digital maintenance records is authentic. The person obtains the MAC of the authentic records, and subjects the copy to the algorithm. If the algorithm produces the same MAC, the copy is taken as authentic.

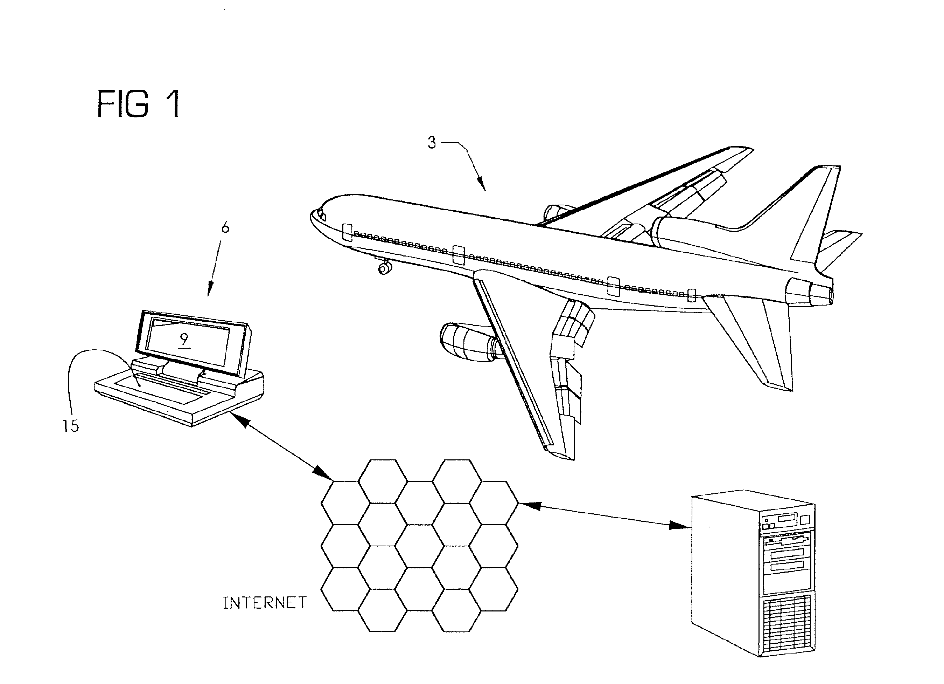

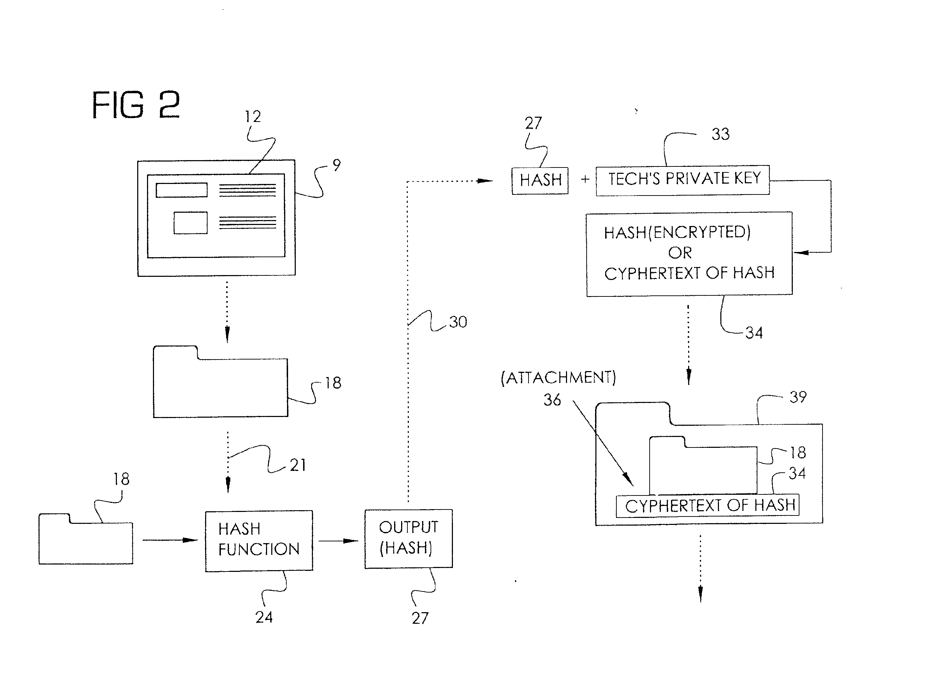

This general overview will be elaborated in greater detail. Figure 1 illustrates an aircraft 3. A party (not shown) affiliated with the aircraft 3, such as a maintenance technician, operates a data terminal, represented by portable computer 6. The display 9 of the computer 6 is shown in greater detail in Figure 2, which depicts an electronic form 12 within the display 9.

Such forms are known in the art, can be created using the commercially available language known as XML, which implements a protocol called XFDL, which is an acronym for eXtensible Forms Definition Language. Commercially available systems for generating the forms are available from PureEdge Solutions, Inc., Suite 601, 108th Avenue Northeast, Bellevue, Washington 98004, and from other suppliers. The forms are generically known as digital documents. The language XML has the desirable attribute of allowing documents written in that language to be easily transmitted over the Internet.

The maintenance engineer enters data into the form 12 in Figure 2 in the usual manner, using the keyboard 15 of the computer 65 in Figure 1, a pointing device (not shown), speech-recognition equipment (not shown), a combination of the preceding, or another type of interface entirely, including interfaces yet-to-be-developed. After the form 12 in Figure 2 is completed, the form and its contents can be viewed, and handled, as a data file 18 in Figure 2.

The invention processes the data file 18 in a particular manner. The processing begins with the operation indicated by arrow 21. The data file 18 is treated as input to a hash function 24, which produces output 27, which is termed the hash of the file 18. The hash function corresponds to the algorithm discussed in the overview given above, and the hash 27 corresponds to the MAC. A simplified example may be helpful in explaining a generalized hash function.

The file 18 contains individual characters. The alphabet from which the characters are taken may be the ASCII character set, the extended ASCII character set, or another character set. In the character set, or alphabet, each character is assigned a numerical value, which commonly ranges from zero to 255, if the characters are represented by single bytes. A byte contains eight bits.

Since each character is assigned a numerical value, the file 18, which contains the characters, can be processed numerically. That is, the characters can be treated as inputs to a numerical equation. As a simplified, but realistic example, the equation may be the following:

$$OUTPUT = C1 - C2 + C3 - C4 + ... +/- CN$$

wherein each "C" represents a character, and the number associated with each "C," such as "1" in "C1," represents the position of the character, counted from the beginning of the file. For instance, "C3" refers to the third character from the beginning.

In this particular example, the OUTPUT is the algebraic sum of the numeric values of the characters, with even-numbered characters being assigned a negative algebraic sign, and odd-numbered characters being assigned a positive algebraic sign. The symbol "+/-" indicates that the sign of "CN" will be either positive or negative, depending upon whether CN stands in an odd or even position.

Therefore, the individual characters of the file 18 are treated as input variables to an equation. The equation corresponds to the hash function 24 of Figure 2. OUTPUT corresponds to the MAC.

Clearly, the value of OUTPUT will depend on the particular characters contained in the file 18, and will change if the characters change. This feature allows one to determine whether the contents of the file 18 have changed.

For instance, the value of OUTPUT is first computed for the original file 18. That value of OUTPUT is then given to a third party, together with a copy of the file 18. The third party can verify whether changes in the file 18 have occurred, in the following manner.

The third party obtains the equation, or hash function 24 used in Figure 2. The third party enters the values of the characters contained in the file 18 into the equation. If the equation produces the same value of OUTPUT, the file is taken to be authentic. If the value of OUTPUT produced is different, then it may be assumed that the file 18 has been altered, either intentionally or accidentally, as through ordinary corruption of data.

The equation given above was chosen to be simple, for ease of explanation. It suffers the small disadvantage that, if the characters of the file are simply re-arranged, the same value of OUTPUT may be obtained, although that is not likely. Thus, this particular equation will not necessarily detect a file which has been altered, but with no addition or deletion of characters.

However, that fact is not a problem, because highly sophisticated mathematical algorithms have been developed for use as the hash function 24 in Figure 2. Some of them are described in the textbook Applied Cryptography, by Bruce Schneier (John Wiley & Sons, New York, 1996, ISBN 0 471 12845 7). This text is hereby incorporated by reference, as illustrating the state of the art in the year 1996.

The OUTPUT, which in cryptographic parlance is termed the hash 27 of the file 18 in Figure 2, is then encrypted by the maintenance engineer, or technician, as indicated by arrow 30. The maintenance engineer utilizes a private key 33, and the encryption process produces an encrypted version of the hash 27, indicated by the phrase HASH(ENCRYPTED), and labeled 34.

In cryptography, the encrypted version of the hash 27 is also called cyphertext of the hash, as indicated. The non-encrypted version of the hash 27, or any non-encrypted document generally, is called the plain text, or clear text.

The cyphertext of the hash 27 is attached to the file 18, as indicated by attachment 36. The result is a composite data file 39, which contains (1) the plain text of the file 18, which was completed by the maintenance technician, and (2) the cyphertext 34 of the hash 27.

The attachment can be accomplished by physically loading the data representing the file 18 and the cyphertext 34 into the same physical storage medium. Alternately, the two items, file 18 and cyphertext 34, can be kept physically separate, but linked in the data storage sense, so that possession of one can be obtained through possession of the other.

A specific terminology will now be introduced. The file 18 will be called the maintenance record 18, while the composite data file 39 will be called the authenticated maintenance record 39, AMR.

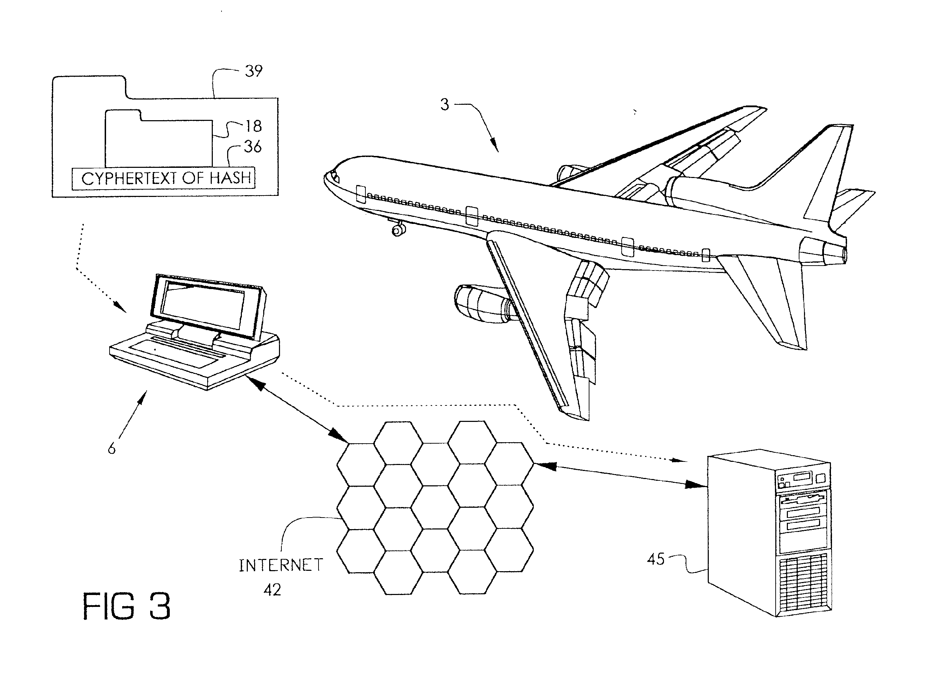

Subsequent processing of the AMR 39 will now be described. At this time, the AMR 39 resides within computer 6, as indicated in Figure 3. Computer 6 need not be a portable, or laptop, computer, but may be part of a larger computer system (not shown). For example, computer 6 may be a terminal, smart or dumb, which communicates with that larger computer system. As a specific example, computer 6 may take the form of a palm-type device.

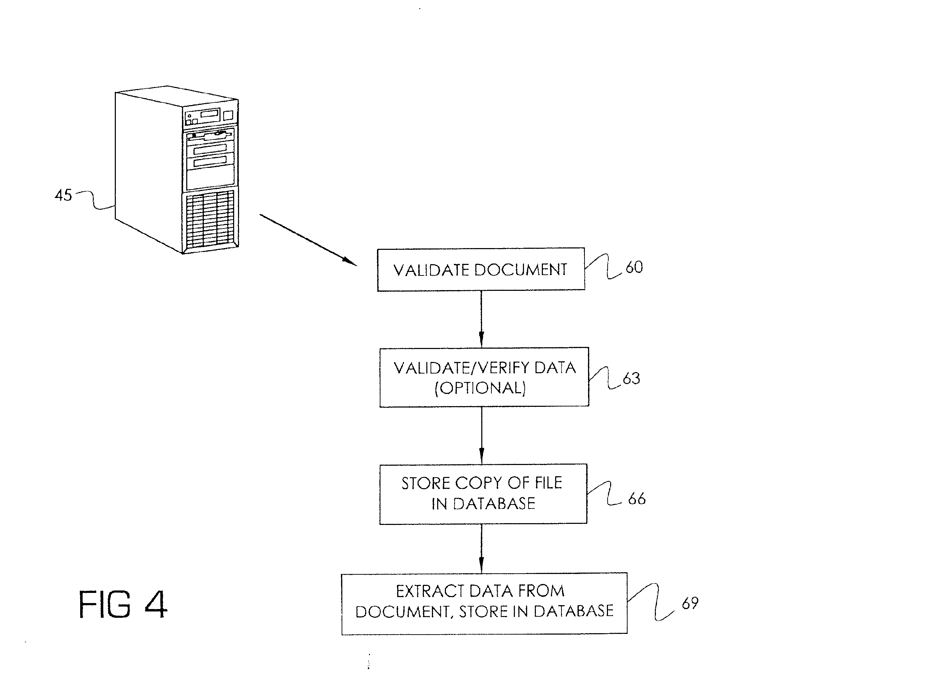

The AMR 39 is transmitted, as by transmission over the Internet 42, from computer 6 to a server 45. Server 45 processes document 39 as indicated in Figure 4.

In block 60, server 45 validates the document. For example, server 45 can first identify the cyphertext 34 in Figure 2 within the AMR 39. Then, the server 45 recovers the plain text of the hash, that is, the actual hash 27 in Figure 2, from the cyphertext 34, using an appropriate key.

As a more specific example, a public/private encryption algorithm can be used, as known in the art, and described in the Schneier text identified above. In this more specific example, the maintenance technician performs the encryption of the hash 27 in Figure 2, using a private key. Then the server 45 in block 60 in Figure 4 de-crypts the cyphertext 34 of the hash 27, using a public key, to obtain the plain text of the hash 27.

Once the plain text of the hash 27 is obtained, the maintenance record 18 in Figure 3, which was received by the server 45, can be verified. As explained above, the server 45 can be equipped with the identical algorithm used to generate the hash 27 in Figure 2. The server 45 applies the maintenance record 18 to that algorithm, as input. If the output obtained matches hash 27 in Figure 2, the maintenance record 18 is taken as validated.

Once the maintenance record 18 is validated, server 45 may execute optional block 63 in Figure 4, which verifies the data within document 18. For example, the server 45 may perform a cross-check to assure that the type of data entered into a blank in the maintenance record 18 corresponds to the data required by the blank. For instance, if a blank requires a date, the server would assure that an actual date was entered into the blank. If the word "Rhode Island" were found in such a blank, the server 45 would take appropriate measures to obtain the correct data. However, the server is not required to correct the data in this manner, and other parties, such as the client of the server, can do so.

As one example of corrective measures, the server 45 may return the maintenance record 18 to the maintenance engineer who generated it, identify the problems to that engineer, and ask that the document be corrected, and resubmitted. The re-submission may follow the procedures outlined above.

When block 66 in Figure 4 is reached, the AMR 39 is stored within one, or more, databases. That is, the process of block 66 stores the plain text of the maintenance record 18, together with the cyphertext 34 of the hash 27, in those databases. Then block 69 is reached, wherein data is extracted from the plain text maintenance record 18, and stored in a database.

For example, in block 69, data from every blank which was filled by the maintenance engineer may be extracted and stored within a database. Not all data need be extracted; selected items can be extracted. Further, the extraction process can occur at different points in time, and different items can be extracted at those times.

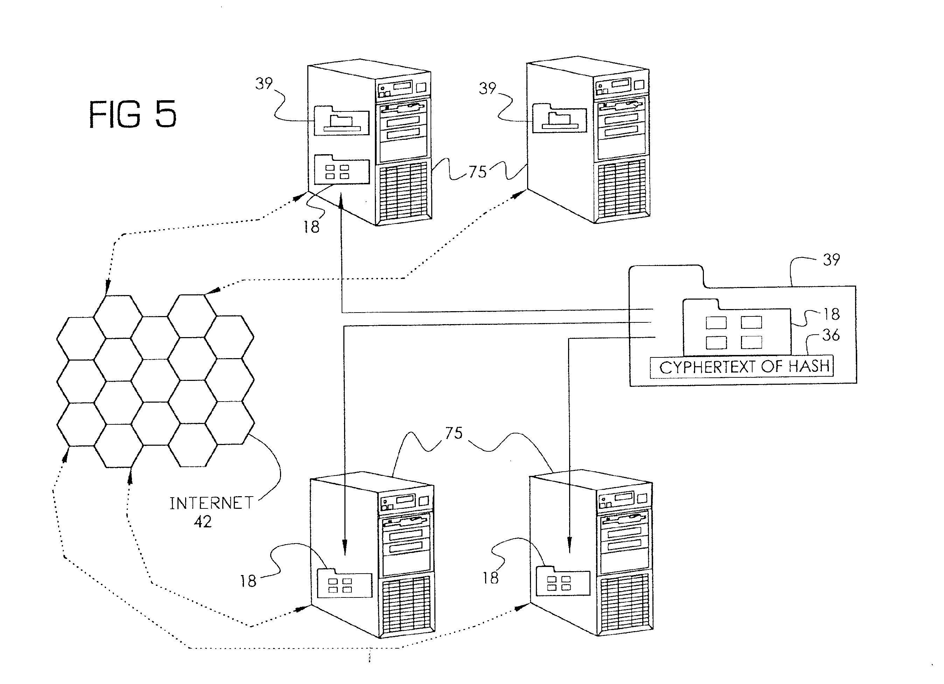

Figure 5 illustrates a structure which is produced by one form of the invention. Servers 75 are shown. In general, they will be maintained at different geographic locations, and, in general, will be distributed throughout the world, in different countries. One, or more, copies of the AMR 39 are stored in servers 75, as indicated. The digital document 18 may, or may not, be encrypted.

In addition, copies of the plain text of the maintenance record 18 can be stored in servers 75. A single server, or the mass storage accessible to it, may contain both (1) the file 39 and (2) the document 18, as indicated. In addition, the entire maintenance record 18 need not be stored in a single server, or in a single database. Selected items of data can be copied from document 18, and stored in various databases. The individual boxes within the maintenance record 18 represent individual items of data.

Specifically, the individual items of data can be loaded into one, or more, databases, for storage and retrieval by known database management systems. For example, one database may be dedicated to a single aircraft. Another database may be dedicated to the fleet of aircraft operated by an airline. Blocks 105 represent the searchable databases.

The servers 75 in Figure 5 can communicate with each other, and transfer the information described herein, as by using the Internet, as indicated.

In one form of the invention, all data extracted from the AMR 39 remains linked to AMR 39. The linkage may take the form of a tag attached to each data item, or a table which traces the origin of each data item. The linkage allows a user to (1) call up a data item, (2) locate the AMR 39 from which the item originated, and (3) repeat the validation process of block 60 in Figure 3, if desired, to assure that the data item originated in the actual form 12 in Figure 2, as opposed to having been created by an imposter. Thus, each item within a searchable database 105 in Figure 5 can be traced to its origin, namely, an original digital document 18.

The process in Figure 2 represented by items 18, 24, and 27 is sometimes called generation of a Message Authentication Code, MAC. The Schneier text, cited above, discusses MACs in detail. Under one form of the invention, the MAC for an aircraft maintenance document is generated, and then encrypted. The cypher text of that encryption process is represented by block 34 in Figure 2.

Under this approach, any copy of the maintenance record 18 can be validated, using the encrypted MAC 34. However, only parties having access to a key which can de-crypt the encrypted MAC 34 can perform the validation. Thus, the ability to validate is limited to a particular set of individuals.

In one form of the invention, no redundant paper records are generated in connection with the maintenance operation. A possible exception lies in paper records required by parties not in control of the maintenance personnel. For example, couriers may require that maintenance technicians sign receipts which acknowledge delivery of maintenance supplies, such as lubricants. However, these records are not redundant, in the sense that they redundantly repeat data content which is contained in the maintenance record 18.

Brackets BB in Figure 1 represent a facility where maintenance is done to aircraft, aircraft engines, or major parts of the aircraft. In the case of an aircraft maintenance facility, brackets BB represent a building which houses aircraft 3, computer 6, and a data link to the Internet, or other external communication link or network.

Computer 6 contains programming and data, represented by block 100, which perform the operations stated herein, which are appropriate to an aircraft maintenance facility. Such operations include (1) generating maintenance records in digital format, (2) producing an MAC from the records, (3) encrypting the MAC, (4) transmitting the encrypted MAC or plain text of the MAC to a storage site, possibly over the Internet, (5) transmitting the digital maintenance records to a storage site, which may be the same as in (4), (6) encrypting the digital maintenance records prior to the transmission in (5) if desired, and (7) verifying a suspect set of maintenance records against their own MAC.

The discussion above stated that the MAC 27 in Figure 2, sometimes called a signature, was attached to file 18, as indicated in file 39. However, that is not necessary in all cases. The MAC is used to verify the authenticity of a copy of file 18. Thus, the MAC is to be made available to parties seeking to make the verification. This availability can be achieved through numerous approaches.

For completeness, various aspects of the invention are set out in the following numbered clauses:

1. A method, comprising:

    a) generating a digital document (18) which records events occurring in maintenance of an aircraft (3); and
    b) generating a Message Authentication Code, MAC, (27) from the digital document (18).

2. Method according to clause 1, and further comprising:

    c) encrypting the MAC (27) into cyphertext (34).

3. Method according to clause 2, and further comprising:

    d) storing the cyphertext (34) and the digital document (18).

4. Method according to clause 3, and further comprising:

    e) transmitting the cyphertext (27) and the digital document (18) to a database management system (45);
    f) extracting data items from the digital document (18); and
    g) inserting the extracted data items into a database (45).

5. Method according to clause 4, and further comprising:

    h) recovering the MAC (27) from the cyphertext (36); and
    i) ascertaining validity of the digital document (18), using the MAC (27).

6. A method of documenting an operation performed upon an aircraft by a party, comprising:

    a) accepting information from the party, and generating a digital document (18) containing the information;
    b) applying an algorithm (24) to the digital document (18), and producing an output (27); and
    c) encrypting the output (27) into cypher text (34), using an encryption key (33) in possession of the party.

7. Method according to clause 6, in which the party signs no paper document corresponding to the digital document (18).

8. Method according to clause 6, and further comprising:

    d) transmitting the cypher text (34) and the digital document (18) over a public-access network (42), to a storage location (45).

9. Method according to clause 8, and further comprising:

    e) recovering the output (27) from the cypher text (34);
    f) applying the algorithm (24) to a version of the digital document (18), to produce a second output; and
    g) comparing the recovered output with the second output.

10. Method according to clause 9, and further comprising:

    h) extracting items of information from the digital document (18), and inserting the items into a searchable database.

11. Method according to clause 10, and further comprising:

    i) maintaining links between both (1) the digital document (18) and (2) the cypher text (34), wherein the digital document (18) from which a specific cypher text (34) originated can be identified and validated using the cypher text (34).

12. A system, comprising:

    a) a first repository (75), containing:

        i) multiple digital documents (18) generated by parties involved in maintenance of aircraft;
        ii) for each digital document (18), cypher text (36) of an Message Authentication Code, MAC;

    b) a second repository (75), containing:

        i) a searchable database; and
        ii) within the searchable database, data items extracted from the digital documents.

13. System according to clause 12, and further comprising:

    c) links which

        i) are associated with data items in the database, and
        ii) identify which digital document acted as the source of the respective data items.

14. Apparatus, comprising:

    a) a building (BB);
    b) an aircraft (3) within the building (BB);
    c) means (6) for generating maintenance records of the aircraft in digital format; and
    d) a system (6, 100) for generating a Message Authentication Code, MAC, based on the records.

15. Apparatus according to clause 14, and further comprising:

    e) means (6, 100) for verifying authenticity of a set of digital maintenance records, based on an MAC associated with the records.

16. Apparatus according to clause 14, and further comprising:

    e) means (6, 100) for transmitting the maintenance records in digital format to a remote site.

17. Apparatus according to clause 16, and further comprising:

    f) means (6, 100) for encrypting the maintenance records in digital format, prior to transmission to the remote site.

**Claims**

1.   A method, comprising:

    a) generating a digital document (18) which records events occurring in maintenance of an aircraft (3); and
    b) generating a Message Authentication Code, MAC, (27) from the digital document (18).

2.   Method according to claim 1, and further comprising:

    c) encrypting the MAC (27) into cyphertext (34).

3.   Method according to claim 2, and further comprising:

    d) storing the cyphertext (34) and the digital document (18).

4.   Method according to claim 3, and further comprising:

    e) transmitting the cyphertext (27) and the digital document (18) to a database management system (45);

f) extracting data items from the digital document (18); and

g) inserting the extracted data items into a database (45).

**5.** Method according to claim 4, and further comprising:

h) recovering the MAC (27) from the cyphertext (36); and

i) ascertaining validity of the digital document (18), using the MAC (27).

**6.** A method of documenting an operation performed upon an aircraft by a party, comprising:

a) accepting information from the party, and generating a digital document (18) containing the information;

b) applying an algorithm (24) to the digital document (18), and producing an output (27); and

c) encrypting the output (27) into cypher text (34), using an encryption key (33) in possession of the party.

**7.** Method according to claim 6, and further comprising:

d) transmitting the cypher text (34) and the digital document (18) over a public-access network (42), to a storage location (45).

**8.** Method according to claim 7, and further comprising:

e) recovering the output (27) from the cypher text (34);

f) applying the algorithm (24) to a version of the digital document (18), to produce a second output; and

g) comparing the recovered output with the second output.

**9.** A system, comprising:

a) a first repository (75), containing:

i) multiple digital documents (18) generated by parties involved in maintenance of aircraft;

ii) for each digital document (18), cypher text (36) of an Message Authentication Code, MAC;

b) a second repository (75), containing:

i) a searchable database; and

ii) within the searchable database, data items extracted from the digital documents.

**10.** Apparatus, comprising:

a) a building (BB);

b) an aircraft (3) within the building (BB);

c) means (6) for generating maintenance records of the aircraft in digital format; and

d) a system (6, 100) for generating a Message Authentication Code, MAC, based on the records.

FIG 1

3

6

9

15

INTERNET

# FIG 2

HASH + TECH'S PRIVATE KEY

HASH(ENCRYPTED)
OR
CYPHERTEXT OF HASH

HASH
FUNCTION

OUTPUT
(HASH)

(ATTACHMENT)

CYPHERTEXT OF HASH

EP 1 286 244 A2

FIG 3

VALIDATE DOCUMENT ～60

VALIDATE/VERIFY DATA
(OPTIONAL) ～63

STORE COPY OF FILE
IN DATABASE ～66

EXTRACT DATA FROM
DOCUMENT, STORE IN DATABASE ～69

FIG 4

FIG 5

CYPHERTEXT OF HASH

INTERNET
42